(19) Europäisches Patentamt

European Patent Office

Office européen des brevets

(11) **EP 1 278 816 B1**

(12) **EUROPEAN PATENT SPECIFICATION**

(45) Date of publication and mention
of the grant of the patent:
**29.03.2006 Bulletin 2006/13**

(21) Application number: **01925570.2**

(22) Date of filing: **25.04.2001**

(51) Int Cl.:
*C11B 1/04* (2006.01)    *C11B 1/06* (2006.01)
*A23D 9/00* (2006.01)    *A23D 7/00* (2006.01)
*A23L 1/24* (2006.01)    *A23L 1/39* (2006.01)

(86) International application number:
**PCT/EP2001/004711**

(87) International publication number:
**WO 2001/083654 (08.11.2001 Gazette 2001/45)**

(54) **METHOD FOR PROCESSING OLIVES**

VERFAHREN ZUR AUFBEREITUNG VON OLIVEN

PROCEDE DE TRAITEMENT DES OLIVES

(84) Designated Contracting States:
**AT BE CH CY DE DK ES FI FR GB GR IE IT LI LU
MC NL PT SE TR**

(30) Priority: **04.05.2000 EP 00303746**

(43) Date of publication of application:
**29.01.2003 Bulletin 2003/05**

(73) Proprietors:
• **UNILEVER N.V.**
**3013 AL Rotterdam (NL)**
Designated Contracting States:
**AT BE CH DE DK ES FI FR GR IT LI LU MC NL PT
SE TR**
• **UNILEVER PLC**
**London, Greater London EC4P 4BQ (GB)**
Designated Contracting States:
**CY GB IE**

(72) Inventors:
• **MAITLAND, Reinout,**
**Unilever Patent Department**
**NL-3133 AT Vlaardingen (NL)**
• **PUTTE, Karel Petrus Agnes Maria Van**
**NL-3133 AT Vlaardingen (NL)**
• **STAVRIDIS, Vangelis**
**GR-185 47 n Faliro (GR)**
• **TORNALETTI, Nicola,**
**VAN DEN BERGH ITALY SPA**
**I- Milano (IT)**

(74) Representative: **Kleiborn, Paul Erik et al**
**Unilever Patent Group**
**Olivier van Noortlaan 120**
**3133 AT Vlaardingen (NL)**

(56) References cited:
**EP-A- 0 849 353**            **WO-A-99/52377**
**FR-A- 2 195 677**            **GB-A- 741 422**

• **DATABASE WPI Section Ch, Week 198744
Derwent Publications Ltd., London, GB; Class
D23, AN 1987-308641 XP002149642 -& ES 8 707
289 A (BERGES L C M), 1 October 1987
(1987-10-01)**

**Description**

The present invention relates to a method for processing olives for obtaining an olive oil with an increased amount of polyphenols.

Olive oil is a product which is of increasing interest, not only for its taste but also for the possible health improving properties. Some of these health improving properties are attributed to the presence of so-called minor nutrients in the olive oil, in particular anti-oxidants such as polyphenols. It has recently been found that such anti-oxidants positively interfere with the body's cardiovascular system.

The present invention is directed towards increasing the amount of polyphenols in the olive oil. Polyphenols are known to be anti-oxidants which are present in olive fruits. Usually polyphenols are present not as a single compound but as a mixture of different polyphenols. Polyphenols are compounds which share a phenolic hydroxyl group. Olive fruit originating polyphenols comprise oleuropein, aglycons, tyrosol and hydroxytyrosol.

The object of the present invention is to increase the level of polyphenols in olive oil, by means of a relative simple method. The object is further that such a simple method is applicable in conventional processes that are used for processing olives without any extra costs. Minimal additional equipment is necessary.

In general, the conventional process for processing olives comprises the following steps:

1. harvesting the olive fruits, removal of any leaves and washing of the olive fruits;
2. crushing;
3. malaxation;
4. decanting (by centrifugation) of the olive oil;
5. further centrifugation.

Different variations of this process are known. For instance in FR 2,195,677 it is described that the olives are not crushed or milled but are transferred directly to a first malaxation apparatus. After processing in the first malaxation apparatus the malaxation mass obtained is transferred to a second malaxation apparatus.

In GB 741,422 a process is described for increasing the amount of oil recovered from cellular vegetable materials such as olives. A liquid medium, such as water, in an amount of 3 to 30 times the weight of the fat containing material, delivers a high speed series of impacts, rupturing the oil or fat containing cells. The particle size of the solid residues obtained is larger than 50 $\mu$m. After the step of rupturing the cells, the mixture obtained is separated into a fat phase and a liquid and/or solids containing phase. WO 99/52377 describes in table I a fortified olive oil with a polyphenols content of 591 ppm. Spreads and dressings are also disclosed in this document. EP-A-0849353 describes in Example 3 a decanted olive oil containing 746 ppm polyphenols and 3 wt.% of fines.

According to the invention it has been found that the level of polyphenols in an olive oil can be increased by adding water to the olives during the crushing of the olives. It has been shown that the addition of water causes fine fruit particles, which are hydrophilic, to be entrained in the added water, and thereafter in the produced olive oil. This effect will contribute to the polyphenols content of the olive oil.

Therefore, according to the invention a method is provided for processing olives obtaining an olive oil, comprising the steps of

a) crushing the olives through a sieve;
b) malaxation of the olive paste obtained in step a);
c) decanting the olive oil;

characterized in that
in step a) water is added in an amount of 1 to 40 % by weight based on the weight of the olives.

During step a) of the process olive oil fruits are crushed, preferably in a hammer mill equipped with a perforated sieve. By means of crushing oil is released from the plant tissue. The hammers rotate inside the sieve with a tip speed that is for example 65 m/sec. Conventionally the sieve will have a mesh of 6 to 8 mm. The present inventors have found that the polyphenols content can be further increased by using a sieve having a mesh of 1 to 6 mm, preferably 1 to 4 mm. By using a smaller sieve the fraction of smallest fruit particles will be maximized.

The amount of water added is within the ranges indicated above. However, depending on the ripeness of the olive fruit, the amount of water added can be varied. The ripeness of the olive fruit is determined by means of the ripeness index, as described for instance by Ranalli and Morelli, Leatherhead Food RA Food Industry Journal, Vol. 2, winter 1999.

The ripeness index defines the maturity of the olive as a function of fruit color in both skin and pulp. Samples of olives, 100 for each variety, are taken at random and are classified into the following categories: 0 = olives with intense green or dark green epidermis (*a*); 1 = olives with yellow or yellow-green epidermis (*b*); 2 = olives with reddish yellow epidermis (*c*); 3 = olives with reddish or light violet epidermis (*d*); 4 = olives with black epidermis, and totally white pulp (*e*); 5 = olives with black epidermis, and violet pulp to the midpoint (*f*); 6 = olives with black epidermis, and violet pulp almost to the pit (*g*); 7 = olives with black epidermis, and totally dark pulp (*h*). The ripeness index is calculated from equation 1, where alphabetic variables indicate the number of fruits in each category.

$$RI = (a \times 0 + b \times 1 + c \times 2 + d \times 3 + e \times 4 + f \times 5 + g \times 6 + h \times 7)/100 \qquad [1]$$

Ripeness values are between 0 and 7.

It has been found that the higher the ripeness index, the less water will need to be added to the olives. Therefor, for olives having a ripeness index of 0 to 4, the water added is preferably 13 to 28 %. For olives having a ripeness index of larger than 4, the water added is preferably 1 to 12 % by weight.

It was further found that the crusher throughput is a factor that also influences the amount of polyphenols in the olive oil obtained. This optimum is influenced by the type and maturity of the olives, as described above, and also by the choice of the mesh of the sieve. The residence time of the olives in the crusher is from 2 seconds to 5 minutes, preferably 2 to 20 seconds.

According to a further aspect of the invention, the water added in step a) contains citric acid as a processing aid. The citric acid will increase the amount of polyphenols in the final olive oil. A further advantage of the use of citric acid is that it has a protective function by chelating metals, which prevents the metals of being catalysts for the oxidation of the polyphenols. The water preferably contains 0.5 to 7 % by weight citric acid, based on the weight of the water.

Preferably as the source of citric acid lemon juice is added. In general lemon juice contains about 7 % by weight citric acid. The lemon juice can be added as such to the water, as long as the citric acid content is within the ranges indicated above. It is also possible to add whole lemons or lemon parts to the water.

In step b) malaxation of the olive paste obtained in step a) is carried out. Malaxation serves to favor the separation of the liquid phases from solids and to break up oil-water emulsions. It facilitates the coalescence of oil droplets and thereby directly influences the oil yield. After crushing up to 45 % of the oil droplets will have a particle size larger than 30 μm whereas after malaxation more than 80 % of the oil droplets will have a particle size larger than 30 μm. Malaxation can be carried out from 10 to 90 minutes. It can proceed under conventional process conditions, for instance at 30 °C and 30 rpm for 30 minutes.

In step c) olive oil is separated from solid phase and aqueous phase. In this step only the coarsest solid matter is removed. The fines, with a high polyphenols content, should be retained in the oil, preferably substantially remaining in the aqueous phase dispersed in the oil. This step can be carried out by means of a centrifuge. Preferably, the decanting step is carried out such that the resulting olive oil has a residual water content of less than 3 wt.%, preferably 0.5 to 1 wt.%. When citric acid has been added to the water, the residual citric acid content in the olive oil will be from 5 ppm to 5000 ppm.

The polyphenols content can be optimized by means of the throughput through the decanter. In general a higher throughput will result in separation of only the heaviest fraction and therefore more olive particles will remain in the olive oil.

After the decanting step an olive oil will be obtained which still contain some olive particles. The solids content of the olive oil, based on the weight of the oil, after decanting is preferably at least 0.05 wt. %. The upper limit for the solids content is preferably 5 wt. %, more preferably 1 wt. %. Solids content can for instance be measured by passing the olive oil obtained through a sieve having a mesh of 0.01 μm and weighing the residue. The average particle size of the olive particles is less than 50 μm, preferably less than 20 μm, more preferably less than 5 μm. The lower limit for the particle size is 0.01 μm in order to characterize the particles as solids. Average particle size can be determined by methods known in the art.

For some applications it can be desirable to have a clear oil. In that case the olive oil can be purified further to remove at least part of the remaining olive particles, for instance by means of centrifugation. It has been found that even in that case an olive oil will be obtained that has a higher polyphenols content than those obtained with conventional methods.

Generally, the olive oil obtainable with the method of the invention has a polyphenols content higher than 300 ppm. In case of the processing of unripe olives having a ripeness index of 0 to 4, the polyphenols content is higher than 500, preferably higher than 1000 ppm. In case of the processing of ripe olives having a ripeness index of more than 4, the polyphenols content is higher than 300 ppm, preferably higher than 400 ppm. The oil obtained has a nice taste with minimal bitterness or astringency as compared to conventional olive oils having a high polyphenols content.

The total content of polyphenols in olive oils can be established by standard methods, e.g. by the colorimetric Gutfinger method as described in J.Am.Oil.Chem.Soc. 1981, 11, pp. 966-968, which method is based on the reaction of a methanolic extract of olive oil and the Folin-Ciocalteau reagent. This method has been used for establishing the polyphenols values mentioned in the present patent specification.

The olive oil obtainable with the method of the invention can be used in the preparation of food products such as a spread, salad dressing, mayonnaise or sauce. Spreads are food compositions which usually contain a substantial amount of fat, often 40 wt.% or more. Usually the fat consists of a liquid oil and a structuring fat which gives the fat blend a proper consistency. Sauces are meant to include any type of sauce, for instance sauces that are ready to use, in particularly after having been heated, such as for instance tomato sauces. Processes for the manufacture of these products are well known in the art and need no illustration.

The olive oil can also be blended with edible oils, such as vegetable oils, examples of which are rapeseed oil, sunflower seed oil, soybean oil and corn oil. This application is not limited to oils which are devoid of any polyphenols, either by nature or because of a refining process, but also of oils which contain polyphenols of their own such as virgin olive oils. Examples of other olive oils which can be mixed with the oil obtainable with the method according to the present invention are an extra virgin olive oil, a fine virgin olive oil, a semi-fine or regular virgin olive oil, a refined olive oil or an olive residue oil but also an olive oil blend, which contains part virgin olive oil and part refined olive oil.

According to a second embodiment of the present invention a method for preparing an olive paste is provided comprising the steps of

a) crushing olives through a sieve, wherein water is added in an amount of 1 to 40 % by weight, preferably 12 to 28 % by weight based on the weight of the olives;
b) malaxation of the olives;
c) separating olive kernel particles from the paste.

The preferred crushing and malaxation conditions are the same as described above.

The olive paste obtained with this process has a high level of polyphenols and is suitable for food applications, in particular in food products having a fat phase. Said paste can be used in food products, such as olive oils, spreads, mayonnaise, sauces, etc. to replace the fat phase normally used in the production of these products.

**Example 1**

An industrial milling was applied, with a hammer crusher equipped with a 4mm mesh sieve. 430 kg olives (Tsounati variety) were crushed in this mill while adding 70.5kg water (16.4 wt.%). Malaxation of the resulting paste was performed at 30 °C and 30 rpm for 30 minutes. The decanter was operated at such a speed that the residual water content of the oil was 3.2 wt.%. The obtained oil is characterized by the fact that it contains 3.2 wt.% water, 0.54 wt.% olive particles with an average particle size of 11.0 $\mu$m and 1100 ppm polyphenols. The taste of the product presented minimal bitterness and astringency.

**Example 2**

The oil from Example 1 is further processed as if a conventional process scheme was applied. The oil is centrifuged in a standard vertical centrifuge. The obtained reference oil is characterized by the fact that it contains only 0.28 wt.% water, 0.03 wt.% olive particles and 269 ppm polyphenols.

**Example 3**

In the same mill mentioned in Example 1 414kg olives (Tsounati variety) were crushed while adding 118.4kg water (28.6 wt.%). Malaxation of the resulting paste was performed at 30 °C and 30 rpm for 30 minutes. The decanter was operated at such a speed that the residual water content of the oil was 1.3 wt.%. The obtained oil is characterized by the fact that it contains 1.3 wt.% water, 0.32 wt.% olive particles with an average particle size of 13.6 $\mu$m and 868 ppm polyphenols. The taste of the product presented minimal bitterness and astringency.

**Example 4**

In a lab scale hammer mill, equipped with a 2 mm mesh sieve, 100 g olives (Koroneiki variety) were crushed while adding 30 g water (30 wt.%) containing 1.44 g citric acid (4.8 wt.%). Malaxation of the resulting paste was performed at 30 °C for 30 minutes. After centrifugation of the paste, the obtained oil is characterized by the fact that it contains 960 ppm polyphenols and 2434 ppm citric acid. The presence of citric acid in the oil was not detected by tasting.

**Claims**

1.  Method for processing olives obtaining an olive oil, comprising the steps of

    a) crushing the olives through a sieve;
    b) malaxation of the olives obtained in step a);
    c) decanting the olive oil;

    **characterized in that**
    in step a) water is added in an amount of 1 to 40 % by weight, based on the weight of the olives.

2.  Method according to claim 1, wherein the olives are crushed through a sieve having a mesh of 1 to 6 mm, preferably 1 to 4 mm.

3.  Method according to claim 1 or 2, wherein the decanting step is carried out such that the resulting olive oil has a residual water content of less than 3 wt.%, preferably 0.5 to 1 wt.%.

4.  Method according to any of the preceding claims, which further includes removing at least part of the olive particles remaining in the olive oil.

5.  Method according to any of claims 1 to 4, wherein olives having a ripeness index of 0 to 4 are processed, **characterized in that** water is added in an amount of 13 to 28 % by weight.

6.  Method according to any of claims 1 or 4, wherein olives having a ripeness index of more than 4 are processed, **characterized in that** water is added in an amount of 1 to 12 % by weight.

7.  Method according to any of the preceding claims, wherein the water added in step a) contains citric acid, preferably in an amount of 0.5 to 7 % by weight, based on the weight of the water.

8.  Method according to claim 7, wherein lemon juice is used as the source of the citric acid.

9.  Method for preparing an olive paste, comprising the steps of

    a) crushing olives through a sieve, wherein water is added in an amount of 1 to 40 % by weight, preferably 12 to 28 % by weight, based on the weight of the olives;
    b) malaxation of the olives;
    c) separating olive kernel particles from the paste.


**Patentansprüche**

1.  Verfahren zur Verarbeitung von Oliven, wobei ein Olivenöl erhalten wird, umfassend die Schritte

    a) Zerquetschen der Oliven durch ein Sieb;
    b) Durchkneten der in Schritt a) erhaltenen Oliven
    c) Dekantieren des Olivenöls;

    **dadurch gekennzeichnet, dass**
    in Schritt a) Wasser in einer Menge von 1 bis 40 Gew./%, bezogen auf das Gewicht der Oliven, zugesetzt wird.

2.  Verfahren nach Anspruch 1, wobei die Oliven durch ein Sieb mit einer Mesh-Größe von 1 bis 6 mm, vorzugsweise 1 bis 4 mm, zerquetscht werden.

3.  Verfahren nach Anspruch 1 oder 2, wobei der Dekantier-Schritt so durchgeführt wird, dass das resultierende Olivenöl einen restlichen Wassergehalt von weniger als 3 Gew.-%, vorzugsweise 0,5 bis 1 Gew.-%, aufweist.

4.  Verfahren nach einem der vorhergehenden Ansprüche, welches weiters das Entfernen mindestens eines Teils der im Olivenöl verbleibenden Oliventeilchen inkludiert.

**5.** Verfahren nach einem der Ansprüche 1 bis 4, wobei Oliven mit einem Reife-Index von 0 bis 4 verarbeitet werden, **dadurch gekennzeichnet, dass** Wasser in einer Menge von 13 bis 28 Gew.-% zugesetzt wird.

**6.** Verfahren nach einem der Ansprüche 1 oder 4, wobei Oliven mit einem Reife-Index von über 4 verarbeitet werden, **dadurch gekennzeichnet, dass** Wasser in einer Menge von 1 bis 12 Gew.-% zugesetzt wird.

**7.** Verfahren nach einem der vorhergehenden Ansprüche, wobei das in Schritt a) zugesetzte Wasser Zitronensäure, vorzugsweise in einer Menge von 0,5 bis 7 Gew.-%, bezogen auf das Gewicht des Wassers, enthält.

**8.** Verfahren nach Anspruch 7, wobei Zitronensaft als Quelle der Zitronensäure verwendet wird.

**9.** Verfahren zur Herstellung einer Oliven-Paste, umfassend die Schritte

a) Zerquetschen der Oliven durch ein Sieb, wobei Wasser in einer Menge von 1 bis 40 Gew.-%, vorzugsweise 12 bis 28 Gew.-%, bezogen auf das Gewicht der Oliven, zugesetzt wird;
b) Durchkneten der Oliven;
c) Abtrennen von Olivenkern-Teilchen aus der Paste.

**Revendications**

**1.** Procédé de traitement des olives pour obtenir une huile d'olive, comprenant les étapes consistant à :

a) écraser les olives à travers un tamis ;
b) malaxer les olives obtenues à l'étape a) ;
c) décanter l'huile d'olive ;

**caractérisé en ce qu'**à l'étape a) on ajoute de l'eau selon une quantité de 1 à 40% en poids, par rapport au poids des olives.

**2.** Procédé selon la revendication 1, dans lequel les olives sont écrasées à travers un tamis doté d'une maille de 1 à 6 mm, de préférence de 1 à 4 mm.

**3.** Procédé selon la revendication 1 ou 2, dans lequel l'étape de décantation est réalisée de sorte que l'huile d'olive résultante a une teneur en eau résiduelle inférieure à 3% en poids, de préférence de 0,5 à 1% en poids.

**4.** Procédé selon l'une quelconque des revendications précédentes, comprenant en outre l'étape consistant à retirer au moins une partie des particules d'olive restant dans l'huile d'olive.

**5.** Procédé selon l'une quelconque des revendications 1 à 4, dans lequel on traite des olives ayant un indice de maturité de 0 à 4, **caractérisé en ce que** l'on ajoute de l'eau selon une quantité de 13 à 28% en poids.

**6.** Procédé selon l'une quelconque des revendications 1 ou 4, dans lequel on traite des olives ayant un indice de maturité supérieur à 4, **caractérisé en ce que** l'on ajoute de l'eau selon une quantité de 1 à 12% en poids.

**7.** Procédé selon l'une quelconque des revendications précédentes, dans lequel l'eau ajoutée à l'étape a) contient de l'acide citrique, de préférence selon une quantité de 0,5 à 7% en poids, en fonction du poids de l'eau.

**8.** Procédé selon la revendication 7, dans lequel on utilise du jus de citron en tant que source d'acide citrique.

**9.** Procédé permettant de préparer une pâte d'olives, comprenant les étapes consistant à :

a) écraser les olives à travers un tamis, dans lequel on ajoute de l'eau selon une quantité de 1 à 40% en poids, de préférence de 12 à 28% en poids, en fonction du poids des olives ;
b) malaxer les olives ;
c) séparer les particules de noyau d'olive de la pâte.